# EUROPEAN PATENT APPLICATION

(11) **EP 1 653 212 A2**
(43) Date of publication of application: **03.05.2006**
(21) Application number: 05466015.4
(22) Date of filing: 24.10.2005
(51) Int. Cl.: G01N 3/40

(54) **Method of measuring the hardness and/or density of yarn packages and a device for carrying out the method**

(30) Priority: 01.11.2004 CZ 20041081
(71) Applicant: Vyzkumny Ustav Textilnich Stroju Liberec a.s., 461 19 Liberec (CZ)
(72) Inventor: Busek, Martin, 460 06 Liberec (CZ); Kloucek, Pavel, Liberec (CZ); Skop, Petr, 460 01 Liberec (CZ); Cejka, Vaclav, 460 13 Liberec (CZ); Sidlof, Pavel, 460 14 Liberec (CZ)
(74) Representative: Musil, Dobroslav

(57) **Abstract**

The invention relates to the measuring method of hardness and/or density of yarn packages (A), at which the yarn package (A) is struck by a striker (14) and simultaneously the time (t) of pulse of an impact initiated by a stroke of the striker(1) to the package (A) is detected out of which the values of hardness or of density of the yarn package (A) is determined.

The invention also relates to the device for measuring of hardness and/or density of yarn packages (A) which contains the striker (14) coupled with a device for detecting the time (t) of pulse of an impact and it is provided with a device for processing and/or evaluation of measuring and/or it is provided with means for connection with an equipment for processing and/or evaluation of measuring.

## Description

### Technical field

The invention relates to the method of measuring of hardness and/or density of yarn packages.

The invention relates also to the device for measuring of hardness and/or density of yarn packages.

### Background art

For the purpose of yarn dyeing the yarns are wound or warped with a small density of packages either to cross cylindrical or cone bobbins or to the warp beams for the weaving machines. Packages of the whole dyeing batch of bobbins and beams must have a small variation of density and of winding height so that the hydraulic resistance of the dyeing bath passing through the packages was identical if possible so that the packages is dyed through evenly. For an optimum adjustment of thread tensioners and of pressure of spool frame of winding machines and similarly also at the warping machines, the package hardness testers are being used which are also used for checking the produced batch of packages on bobbins or warp beams, this at the producer as well as at the customer.

The mechanical hardness testers of Shore brand are known at which the round portion is being pressed-in into the package applying a specified force mostly manually, while the pressed-in depth is watched. The disadvantage of the Shore hardness testers is that they are not much suitable for soft packages as they have relatively low distinction and the measuring is burdened with a mistake from the subjective evaluation of touch of the hardness tester base with the package, which happens also to the skilled persons.

In cases where it is important that the whole batch of packages is dyed through evenly, the density of package is being evaluated through measuring of geometric dimensions of packages and through weighing of packages including the carriers (tubes, warp beams). Good reproduced results are an advantage of this manner. Nevertheless the disadvantage is that it is difficult to measure the geometric dimensions at more complicated forms of packages which is after then time-consuming and can generate the inaccuracies as well.

Experimentally also the method of stabbing the flat needle into the package is known where the torque is after then measured during turning the needle in the package. The results of measurement are after then determined according to how deep the needle penetrated into the package. The danger that the threads in the package may be mechanically damaged represent a disadvantage of this method, especially at the threads from synthetic materials, at the harder packages and at the warp beams with threads being wound without crossing.

The goal of the invention is to eliminate or at least to minimise the disadvantages of present state of the art.

### The principle of invention

The goal of the invention has been reached by a measurement method of hardness and/or density of yarn package whose principle consists in that the striker strikes the yarn package, at the same time the time of pulse of an impact initiated by the striker striking the package is detected, from which the hardness value or the density of yarn package is being determined.

To improve the accuracy of measurement, besides the time of pulse of an impact initiated by striking the striker the package, also the value of striker acceleration upon the striker's striking the package is being detected and the time of pulse of an impact initiated by the striker's striking the package is corrected according to the acceleration value, through which the constant referential acceleration value is attained at which the referential time of pulse of an impact caused by striker striking the package is being read out.

According to the advantageous embodiment, the hardness value or the density of yarn package can be determined from the parabolic dependence of hardness or density of a yarn package on the time of pulse of an impact upon striker striking the package, at the same time it is advantageous if the hardness or density value of a yarn package is determined by a parabolic and/or linear regression.

The striker strikes the yarn package either manually or by means of a machine.

The advantage of an above mentioned method is that it is a sensitive method with a high distinction which enables to measure the undersurface layers of package. Another advantage of this method is that the measurement may be performed also at rotation of the package, possibly directly at winding the yarn onto the bobbin or the warp beam. Another advantage of this method is that thanks to the correction of impact intensity, the measurement is in broad limits independent on magnitude of particular impacts at individual strokes.

The principle of the device for measuring of hardness and/or density of yarn packages is that it contains the striker coupled with device for detecting the time of pulse of an impact and is provided with an device for processing and/or evaluation of measurement and/or is provided with means for connection with equipment for processing and/or evaluation of measurement.

This device is simple, cheap, sufficiently accurate and features a high durability.

For a more precise measurement it is advantageous if the striker is coupled with the device for detecting the striker's acceleration when the striker strikes the package.

To be able to preserve the operational as well as measuring data directly in the device without necessity to use an external element, it is advantageous if the device is provided with a memory for storage of data.

To increase the variability of the device, it is advantageous if the equipment is provided with means for connection of an external memory for storage of data.

For an instantaneous displaying of equipment setting and/or of measurement results it is advantageous to provide the device with an display unit.

For an easy attendance it is advantageous, if the device is provided with a selector of working modes.

For measurement of a whole spectrum of packages of various structures and hardness by one device, it is advantageous if the striker is provided with an replaceable striking part.

### Description of the drawing

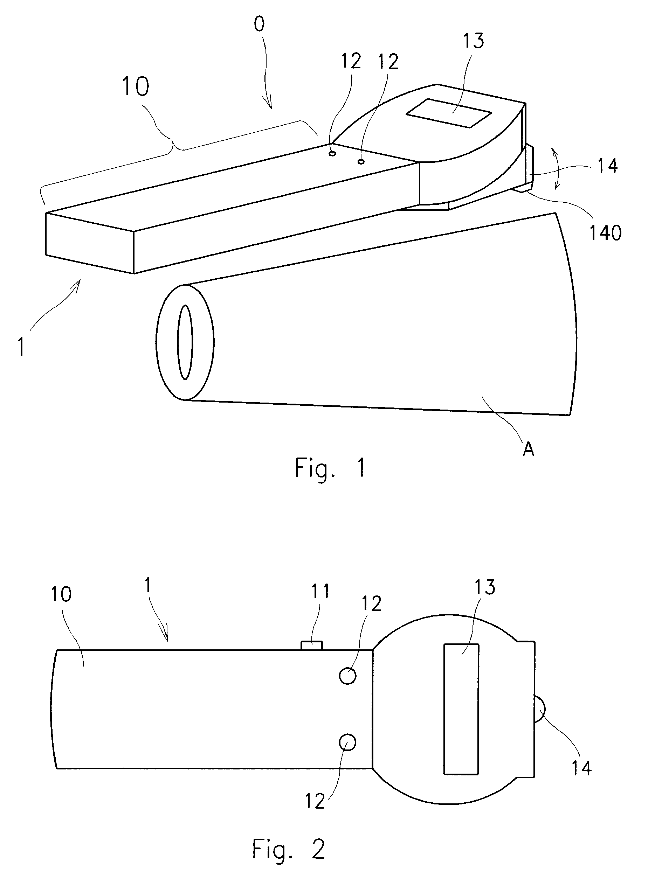

The invention is schematically shown in the drawing where the Fig. 1 shows measurement of a yarn package on the cone bobbin and the Fig. 2 shows an example of device execution for measuring of hardness and/or of density of yarn packages.

### Examples of embodiment

The method of measuring the hardness and/or the density of yarn packages **A** consists in the fact that the package measured **A** is firmly attached to or lies on a rigid housing e.g. on an adequately rigid board thus the danger that the measuring is influenced by outer effects is minimised. After then the device **0** equipped with a striker **14** is used which once, or to increase the measurement accuracy, more times hits the package **A**, this manually or using a suitable means. The intensity of an impact, advantageous if automatically, is corrected by regulating the measured acceleration **a** of the striker **14** at impact into the package **A** for the purpose to keep the fixed referential value of acceleration **a**_{**ref**}**,** at which the referential time **t**_{**ref**} of the pulse at impact is read out. At harder packages **A** the referential time **t**_{**ref**} of the pulse at impact is shorter, at the softer packages **A** the referential time **t**_{**ref**} of the pulse at impact is longer.

Thanks to the correction of impact intensity the measuring in broad limits is independent on value of particular impacts at individual strokes. A small impact when the acceleration **a** does not even reach the comparative value of acceleration **a**_{**komp**} (the minimum acceleration value at which the measurement is started) or it is tightly above its limit is not usable or does not give the reliable results. At the same a great impact at which the acceleration **a** expressively exceeds the maximum attained speed **a**_{**max**} at calibration and the hardness calculation, respectively of the density of a package **A** is not much reliable, or if it threatens that the operational scope of acceleration detector in the device **0** could be exceeded. Only the impacts that meet the previous conditions are valid and able for further processing for determination of hardness value or density value of an yarn package **A**.

The real value of hardness or of density of an yarn package **A** at the same time has an parabolic dependence on the referential time **t**_{ref} of the pulse of an impact at stroke; according to this dependence the density or hardness of a particular package **A** is determined

The mathematical constants, describing the parabolic dependence of hardness or of density of particular yarn packages **A** on the referential time t_{ref} of pulse of an impact at stroke, are determined experimentally, e.g. by calibration of an equipment **0** provided by a calibration mode of its activity.

An experimental determination of mathematical constants describing the parabolic dependence of hardness or density of a particular yarn packages **A** on the referential time **t**_{ref} of pulse of an impact at stroke by calibration of an device **0** is being performed e.g. so that the packages **A** from an identical production batches are selected but with an expected sufficiently large scatter of hardness or density values of packages **A**. The number of selected calibrating packages **A** and number of strokes to individual packages **A** is being entered into the device **0** . After then the calibration measurement by means of the device **0** is performed, this in such a way that a specified number of calibration strokes to each calibration package **A** is carried out. Through this the values of acceleration **a**_{ref} and a referential time **t**_{ref} of pulse of an impact are detected at each stroke of the device **0** , after then through mathematical means, e.g. by a linear and/or parabolic regression, the calibration constants of the device **0** are determined. The calibration constants are determined either by own means of the device **0** or they are determined by means of a computer, e.g. computer of the PC type.

Through this procedure, the corresponding calibration constants may be acquired for various types of packages **A** which may be stored, for a use upon a particular measurement of particular packages **A** , either directly in the device **0** provided with a suitable memory or they may be stored in external memory, e.g. in memory of an suitable computer. If the device **0** performs also processing, evaluation and displaying of results of hardness or density measurement of the package **A**, then the device **0** , after selection of an respective type of measured packages **A**, automatically selects the corresponding calibration constants either from its memory or from an external memory, e.g. of an suitably connected computer and it is able to give directly the values of hardness or of density of that particular measured package **A** in corresponding units. Thanks to possibility of interconnection with a computer, the device **0** is able to transfer the measured data either in the form of "raw" (RAW) data or in the pre-processed form or in the completely processed form into the computer (including e.g. statistical data etc.), which after then ensures either only displaying of measurement results or ensures also displaying of partial results or may perform also processing of measuring instead of the device **0**. The computer enables further processing of data either for a suitable manner of data visualisation or for a suitable way of the processing itself of the measured data including the method of statistical processing and data evaluation.

Not always is the calibration of the device **0** necessary before measuring. This is in a case if the exact value of hardness or density of the package **A** is not important, but only value related e.g. to the known package **A**, with which the other packages **A** are being compared. Frequently it is therefore possible to be satisfied with mere comparison of such measured values of hardness or density of packages **A** in the production batch and based on that to eliminate the packages **A** with limit values that do not already guarantee the required standard for further processing. For such cases it is convenient to have several identically adjusted instruments when one instrument is used e.g. for adjustment in production, the second at the final inspection and the third is used upon the acceptance at the customer etc. Such whole set of instruments in the individual places may be after then set to identical parameters e.g. through calibration by striking the same calibration rubber and not the calibration package **A**.

According to the example of embodiment in Fig. 2 the device **0** is organised into an ergonomically shaped resistant box **1**. The power supply accumulators, the main switch **11** and the control buttons **12** are positioned in the handle **10.** In the front part of the box **1** there is a LCD display situated **13** for displaying of messages and results of measurement. Other (not represented examples of embodiment) electronic items of the device **0** are positioned under the display **13.** In the front part of the box **1** there is also situated a striker **14** which aims downwards and whose striking portion **140** (see Fig. 1) reaches nearly under the box **1**, so that the stroke into the package **A** could be performed using the box. The striker **14** is e.g. mechanically coupled with (not represented example of embodiment) a sensor of acceleration **a**, e.g. capacity sensor of acceleration **a**. It is advantageous if the striking portion **140** of the striker **14** is rounded and is replaceable, so that according to the structure and expected hardness of that particular package **A** the striking portion **140** with a suitable radius or other suitable shape may be used. Next to this, the device **0** has a suitable not illustrated interface for connection to the computer or to other suitable equipment, e.g. is provided with a suitable connector for cable connection or is provided with means for wireless connection (IRDA, BluTooth etc.).

According to other execution the equipment **0** contains the separate removable part with striker **14** and with acceleration sensor **a**, a not represented example of embodiment, with a necessary supporting electronics , at the same time the equipment **0** also contains the separate processing and/or evaluating portion with means for processing and/or evaluation of measurement and/or with means for further transfer of measured data. Both separate parts of the device **0** may be coupled by means of a cable or in a wireless manner for the purpose of data transfer.

Upon communication of the device **0** with the computer or other suitable device, after starting the device **0**, the suitable mode of operation from an offer of several modes (measuring mode, mode for data despatch, mode for data receipt, calibration mode etc.) is selected.

For example, at the fully independent device which performs also evaluation of measured data and is displaying directly the values of hardness or density of packages **A** , the activity may be such that after selection of an measuring mode, the calibration coefficients and data from the own memory of the device **0** are loaded automatically (the calibration coefficients and other data may be in advance loaded into the memory of the device **0** in the mode for data receipt from the computer etc.). According to the constants and data loaded from own memory of the device **0** this device sets the comparing level of acceleration **a**_{**komp**} and it itself performs calculation of linear and parabolic regression for mathematical correction of measured data. After then the device **0** is prepared to measuring, e.g. with a given number of strokes to each package **A**. After a regular impact is initiated by a stroke of striker **14** to the package **A,** the device **0** detects the highest value of acceleration **a**_{**max**} and the time **t**ᵢ of pulse of an impact on the comparable level of the acceleration **a**_{**komp**}. Out of these values the real values of hardness or density of the package **A** are calculated which are after that displayed on the display **13** and are stored into the own memory of the device **0**, which after that waits for performance of other stroke.

An example of operation of the device **0,** having selected the mode "data transfer", is such that in the device **0** the test is running to check whether the measured data designated for transfer into the computer are contained in the own memory of the device **0**. In case such data are contained in the memory of the device **0**, the automatic transfer of such data into the connected computer is performed, this together with data on setting the device **0** during measuring. Consequently, the data are erased from the memory of the device **0**.

An example of activity of the device **0,** having selected the mode "data receipt", is such that first the own memory of the device **0** is erased and this after then waits for receipt of data and calibration coefficients from the connected computer to perform measuring on other type of packages **A**, etc. For receipt of the data and coefficients, the device **0** automatically transfers to measuring mode.

An example of activity of the device **0**, having selected the calibration mode is such, that the calibration packages **A** are tested identically as at the common measuring, but the calculation of hardness or density of the package **A** is not carried out, nevertheless the measured values of the maximum acceleration **a**_{**max**} and time **t**_{**i**} of pulse of impacts on the comparing level of acceleration **a**_{**komp**} are stored into an own memory of the device **0** and on the display **13** only data on number of strokes performed on individual packages **A** and on a number of calibration packages **A** are displayed. After the required number of calibration measuring is performed, the measured data, in case the device **0** is not able to determine itself the calibration constants for its own measuring, are transferred from the memory of the device **0** into the computer, where the appropriate software determines the corresponding calibration constants, which in the corresponding operation mode of the device **0** are transferred into the own memory of the device **0**, e.g. after the previous erasion of memory of the device **0** by switching into the above mentioned mode "data receipt".

It is obvious that a number of operations necessary for measuring may be performed either by the device **0** itself or it can be performed by a suitable computer, this in principle according to the program outfit of the device **0** and a computer.

Measuring is performed either by a manual striking with the device **0**, or by its striker **14** into the package **A** or the device **0** is positioned into the holder in an appropriate stand which is provided with a suitable means e.g. by a spring for sending off the holder with the device **0** under the specified conditions (especially the speed) against a suitably positioned package **A** which is measured. The stand with holder and with a specified sending off the device **0** against the measured package **A** restrict the possible invalid strokes due to a small or on the contrary too big impact initiated by a manual strokes .

### Industrial applicability

The invention is applicable first of all in the textile production.

## Claims

1. A method of measuring of hardness and/or density of yarn packages, **characterised by** that the striker (14) strikes the yarn package (A), simultaneously the time (t) of pulse of an impact initiated by stroke of the striker (1) to the package (A) is detected, from which the value of hardness, or of density of an yarn package (A) is determined.

2. A method as claimed in the claim 1, **characterised by** that, except the time (t) of pulse of impact initiated by a stroke of striker (14) to the package (A), also the value of acceleration (a) of the striker (14) at stroke of the striker (1) to the package (A) is detected, and according to acceleration value (a) the time (t) of pulse of an impact initiated by a stroke of striker (14) to the package (A) is corrected, through which a constant referential value of acceleration (a_{ref}) is maintained, at which the referential time (t_{ref}) of pulse of an impact at stroke of the striker (14) to the package (A) is read out.

3. A method as claimed in any of the claims 1 or 2, **characterised by** that value of hardness or density of yarn package (A) is determined based on a parabolic dependence of hardness or density of yarn package (A) on time (t) of pulse of an impact at the stroke of striker (14) to the package (A).

4. A method according to the claim 3, **characterised by** that the value of hardness or of density of the yarn package (A) is determined by a parabolic and/or a linear regression.

5. A method as claimed in any of the claims 1 to 4, **characterised by** that the yarn package (A) is struck by the striker (14) manually.

6. A method as claimed in any of the claims 1 to 4, **characterised by** that the yarn package (A) is struck by the striker (14) by means of a machine.

7. A device for measuring of hardness and/or density of yarn packages **characterised by** that it contains the striker (14) coupled with a device for detecting the time (t) of pulse of an impact and it is provided with an equipment for processing and/or evaluation of measuring and/or it is provided with means for connection with an equipment for processing and/or evaluation of measuring.

8. A device as claimed in the claim 7 **characterised by** that the striker (14) is coupled with a device for detecting an acceleration (a) of the striker (14) at stroke of the striker (14) to the package (A).

9. A device as claimed in any of the claims 7 or 8 **characterised by** that it is equipped with a memory for data storage.

10. A device as claimed in any of the claims 7 to 9 **characterised by** that it is equipped with means for connection with an external memory for data storage.

11. A device as claimed in any of the claims 7 to10 **characterised by** that it is equipped with a displaying unit of measurement results and/or of setting.

12. A device as claimed in any of the claims 7 to 11 **characterised by** that it is equipped with a selector of working modes.

13. A device as claimed in any of the claims 7 to 12 **characterised by** that the striker (14) is equipped with a replaceable striking portion (140).
